(19) Europäisches Patentamt

European Patent Office

Office européen des brevets

(11) **EP 1 274 141 A1**

(12) **EUROPEAN PATENT APPLICATION**
published in accordance with Art. 158(3) EPC

(43) Date of publication:
**08.01.2003 Bulletin 2003/02**

(21) Application number: **01917579.3**

(22) Date of filing: **29.03.2001**

(51) Int Cl.[7]: **H01M 4/62**, H01M 4/02,
H01M 4/58, H01M 10/40

(86) International application number:
**PCT/JP01/02610**

(87) International publication number:
**WO 01/073874 (04.10.2001 Gazette 2001/40)**

(84) Designated Contracting States:
**AT BE CH CY DE DK ES FI FR GB GR IE IT LI LU
MC NL PT SE TR**

(30) Priority: **29.03.2000 JP 2000095287
11.10.2000 JP 2000310011**

(71) Applicant: **TOYO TANSO CO., LTD.
Osaka-shi, osaka 555-0011 (JP)**

(72) Inventors:
• **OHTA, Naoto
Mitoyo-gun, Kagawa 769-1612 (JP)**

• **SOGABE, Toshiaki
Mitoyo-gun, Kagawa 769-1612 (JP)**
• **KURODA, Koji, Toyo Tanso Co. Ltd
Osaka-shi, Osaka 555-0011 (JP)**

(74) Representative:
**Leson, Thomas Johannes Alois, Dipl.-Ing.
Patentanwälte
Tiedtke-Bühling-Kinne & Partner,
Bavariaring 4
80336 München (DE)**

(54) **LITHIUM ION SECONDARY BATTERY CATHODE, BINDER FOR LITHIUM ION SECONDARY BATTERY CATHODE AND LITHIUM ION SECONDARY BATTERY USING THEM**

(57)     A lithium ion secondary cell anode, wherein carbon material including graphite having a $d_{002}$ of not more than 0.3370nm of X-ray parameters that can be obtained from the Gakushin-method for X-ray diffraction of carbon is used as a part of an active material, and a macromolecular material having a surface energy $\gamma_S$ of not less than $30 mJm^{-2}$ is used as a binder.

**EP 1 274 141 A1**

## Description

### Technical Field

The present invention relates to a lithium ion secondary cell anode, a binder for the lithium ion secondary cell anode, and a lithium ion secondary cell using them. More particularly, the present invention relates to the lithium ion secondary cell anode using macromolecular material having a surface energy $\gamma_S$ of not less than $30mJm^{-2}$ as the binder and to the binder for the lithium ion secondary cell anode.

### Background Art

In recent years, the tendency has been increasingly developed to miniaturize electronic equipment, particularly, portable devices, such as a mobile phone and a notebook computer. Along with this tendency, the secondary cell used for driving those electronic devices has become a key component for the miniaturization. Among the secondary cells, the lithium ion secondary cell has been increasingly studied and also produced on a commercial basis as power source for driving the portable devices, in terms of lightweight and high energy density.

The active material of carbon material comprising graphite is mainly used for the lithium ion secondary cell anode, in terms of safety and the like. The graphite is the active material that reacts with lithium ion to form an intercalation compound. In the lithium ion secondary cell anode, lithium ion is electrochemically moved in and out between graphite layers included in anode active material (intercalation/de-intercalation) in electrolyte solution, so as to charge or discharge electricity. It is important for lithium ion to be electrochemically moved in and out between the graphite layers (intercalation/de-intercalation) to prevent any other side reaction than the intercalation/de-intercalation of the lithium ion, such as decomposition of the electrolyte solution.

In the lithium ion second cell, the electrolyte solution comprising an aprotic solvent as a main material is used because of the lithium reacts with water. The aprotic solvent of propylene carbonate (hereinafter it is abbreviated to "PC") having a stability at fairly negative potential, in which lithium salt ($LiClO_4$, $LiPF_6$, $LiBF_4$, $LiAsF_6$, etc.) is dissolved, is now in anticipation as electrolyte solution.

However, PC has the problem that since decomposition reaction is preferentially induced before lithium ion is intercalated in the carbon material, it is impossible for lithium ion to be intercalated in the carbon material. Accordingly, as a substitute for this solvent, a mixed electrolyte solution of ethylene carbonate (hereinafter it is abbreviated to "EC") and an alkyl carbonate is mainly used as the electrolyte solution of the lithium secondary cell using the carbon material comprising graphite as the anode active material.

However, since the ether electrolyte solution has a low boiling point, it has the disadvantages of being unable to be used under a high temperature atmosphere and yet being weak against self-heating of the cell. Thus, the ether electrolyte solution is not suitable for the electronic equipment that is used for long hours, such as a notebook computer and a portable video camera. In the circumstances, development of the electrolyte solution which is strong against the high temperature atmosphere and against the self-heating is now being desired.

Although PC has excellent characteristics in those respects, there still remains the problem that PC is susceptible to reaction with the anode active material comprising graphite and thus to decomposition, as mentioned above.

The present invention has been made to solve the problems mentioned above. It is an object of the present invention to provide a lithium ion secondary cell anode comprising carbon material comprising graphite that can afford the use of PC as the electrolyte solution, a binder for the lithium ion secondary cell anode, and a lithium ion secondary cell using them.

### Disclosure of the Invention

The inventors have considered the possibilities of solving the problems noted above and have made the hypothesis that decomposition reaction of PC could be suppressed by avoiding direct contact of PC of electrolyte solution and graphite in anode active material. And, they have found that when an interfacial surface energy between the graphite and a binder is controlled by regulating a surface energy of the binder comprising macromolecular material for binding the graphite in the active material, the decomposition of PC is suppressed. The present invention has been accomplished, based on this.

The present invention provides a lithium ion secondary cell anode, wherein carbon material having a $d_{002}$ of not more than 0.3370nm of X-ray parameters that can be obtained from the Gakushin-method for X-ray diffraction of carbon is used as a part of an active material, and a macromolecular material having a surface energy $\gamma_S$ of not less than $30mJm^{-2}$ is used as a binder.

Preferably used as the carbon material used as a part of the anode active material used in the present invention is any one of natural graphite, artificial graphite, resin carbon, carbide of natural product, petroleum coke, coal coke, pitch coke, and meso-carbon microbead, which is 0.3370nm or less in $d_{002}$ of the X-ray parameters that can be obtained from the Gakushin-method for X-ray diffraction of carbon, or combination of two or more of them. Particularly preferable is the carbon material comprising either natural graphite or artificial graphite. This can produce the lithium ion secondary cell anode of high safety and high capacity.

It is to be noted here that the carbon material of 0.3370nm or less in the $d_{002}$ of the X-ray parameters obtainable from the Gakushin-method for X-ray diffraction of carbon has the degree of graphitization of not less than 0.4, which provides a region dominantly affected by the intercalation process of lithium.

When the surface energy $\gamma_S$ is not less than 30 mJm$^{-2}$, the difference of the surface energy $\gamma_S$ from the surface energy $\gamma_S$ of the carbon material (e.g. the order of 120 mJm$^{-2}$ in the case of natural graphite) can be reduced, and as such can allow the interfacial surface energy to be reduced and stabilized, so as to provide increased contact action.

In the lithium ion secondary cell anode of the present invention, the surface energy $\gamma_S$ is a value calculated from measurement of contact angles under room temperature using water and methylene iodide as test liquids by using the following equations (1), (2) and (3):

$$1+\cos\theta=2\ [(\gamma_S{}^d \cdot \gamma_L{}^d)/\gamma_L]^{\ 1/2} + 2\ [(\gamma_S{}^p \cdot \gamma_L{}^p)/\gamma_L]^{\ 1/2} \tag{1}$$

$$\gamma_S=\gamma_S{}^d+\gamma_S{}^p \tag{2}$$

$$\gamma_L=\gamma_L{}^d+\gamma_L{}^p \tag{3}$$

where $\theta$ represents a contact angle in each test liquid, $\gamma_S{}^d$ and $\gamma_L{}^d$ represent a dispersion component of the surface energy of the macromolecular material and that of the test liquid, respectively, and $\gamma_S{}^p$ and $\gamma_L{}^p$ represent a polar component of the surface energy of the macromolecular material and that of the test liquid, respectively, and following values are given to the values of the surface energies of water and methylene iodide:

Water: $\gamma_L{}^d=21.8$mJm$^{-2}$, and $\gamma_L{}^p=51.0$ mJm$^{-2}$

Methylene iodide: $\gamma_L{}^d=48.5$mJm$^{-2}$, and $\gamma_L{}^p=2.3$mJm$^{-2}$.

In the lithium ion secondary cell anode of the present invention, the macromolecular material preferably used is a macromolecular material which has an electrochemically active carbonyl group in its main chain or its side chain and also has a carbonyl group content of not less than 0.05 in the macromolecular material expressed by the following equation (4):

$$(\text{Number of oxygen of carbonyl group} \times 16)/(\text{Molecular weight per unit of polymer}) \tag{4}$$

.

When the macromolecular material having a carbonyl group content of not less than 0.05, or preferably not less than 0.10, in the macromolecular material expressed by the equation (4) given above is used, increased capacity can be provided.

It is preferable that the macromolecular material is any one of polyimide, polyamide imide and polyamide, or combination of two or more of them.

Among the polyimide, polyamide imide and polyamide, any one of aromatic polyimide, aromatic polyamide imide and aromatic polyamide, or combination of two or more of them is particularly preferable.

In the lithium ion secondary cell anode of the present invention, a metal or a metallic compound may be used as an additional material included in the active material.

This can provide the lithium ion secondary cell using the carbon material including graphite as a part of the active material that can prevent PC of the electrolyte solution from being decomposed.

A binder for a lithium ion secondary cell anode of the present invention is a macromolecular material having a surface energy $\gamma_S$ of not less than 30mJm$^{-2}$ calculated from measurement of contact angles under room temperature using water and methylene iodide as test liquids by using the following equations (1), (2) and (3):

$$1 + \cos\theta=2\ [(\gamma_S{}^d \cdot \gamma_L{}^d)/\ \gamma_L]^{\ 1/2} + 2\ [(\gamma_S{}^p \cdot \gamma_L{}^p)/\ \gamma_L]^{\ 1/2} \tag{1}$$

$$\gamma_S = \gamma_S{}^d + \gamma_S{}^p \tag{2}$$

$$\gamma_L = \gamma_L{}^d + \gamma_L{}^p \tag{3}$$

where $\theta$ represents a contact angle in each test liquid, $\gamma_S{}^d$ and $\gamma_L{}^d$ represent a dispersion component of the surface energy of the macromolecular material and that of the test liquid, respectively, and $\gamma_S{}^p$ and $\gamma_L{}^p$ represent a polar component of the surface energy of the macromolecular material and that of the test liquid, respectively, and following values are given to the values of the surface energies of water and methylene iodide:

Water: $\gamma_L{}^d = 21.8 \text{mJm}^{-2}$, and $\gamma_L{}^p = 51.0 \text{ mJm}^{-2}$     Methylene iodide: $\gamma_L{}^d = 48.5 \text{mJm}^{-2}$, and $\gamma_L{}^p = 2.3 \text{mJm}^{-2}$.

When the surface energy $\gamma_S$ is not less than 30 mJm$^{-2}$, the difference of the surface energy $\gamma_S$ of the binder from the surface energy $\gamma_S$ of the carbon material (e.g. the order of 120 mJm$^{-2}$ in the case of natural graphite) can be reduced, and as such can allow the interfacial surface energy to be reduced and stabilized, so as to provide increased contact action.

In the binder for lithium ion secondary cell anode of the present invention, the macromolecular material preferably used is a macromolecular material which has an electrochemically active carbonyl group in its main chain or its side chain and also has a carbonyl group content of not less than 0.05 in the macromolecular material expressed by the following equation (4):

$$(\text{Number of oxygen of carbonyl group} \times 16)/(\text{Molecular weight per unit of polymer}) \tag{4}$$

.

When the macromolecular material having a carbonyl group content of not less than 0.05, or preferably not less than 0.10, in the macromolecular material expressed by the equation (4) given above is used, increased capacity can be provided.

It is preferable that the macromolecular material is any one of polyimide, polyamide imide and polyamide, or combination of two or more of them.

Among the polyimide, polyamide imide and polyamide, any one of aromatic polyimide, aromatic polyamide imide and aromatic polyamide, or combination of two or more of them is particularly preferable.

Also, the present invention provides a lithium ion secondary cell using the lithium ion secondary cell anode and the binder for the lithium ion secondary cell anode.

**Brief Description of the Drawings**

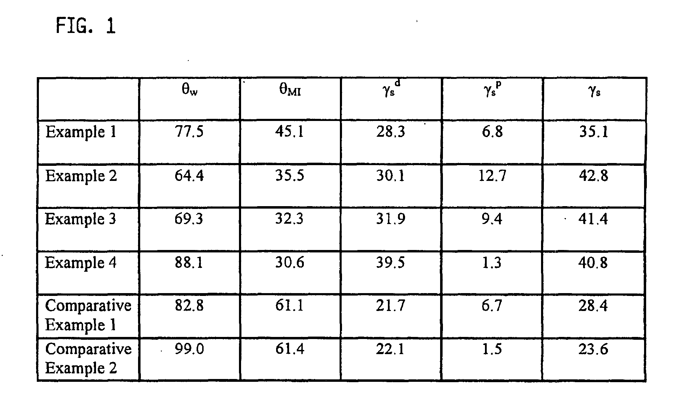

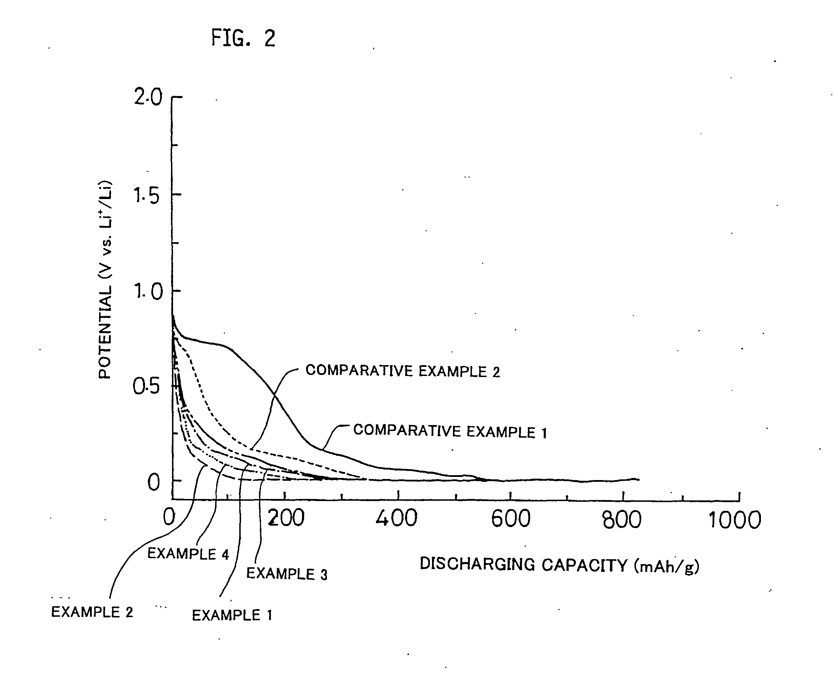

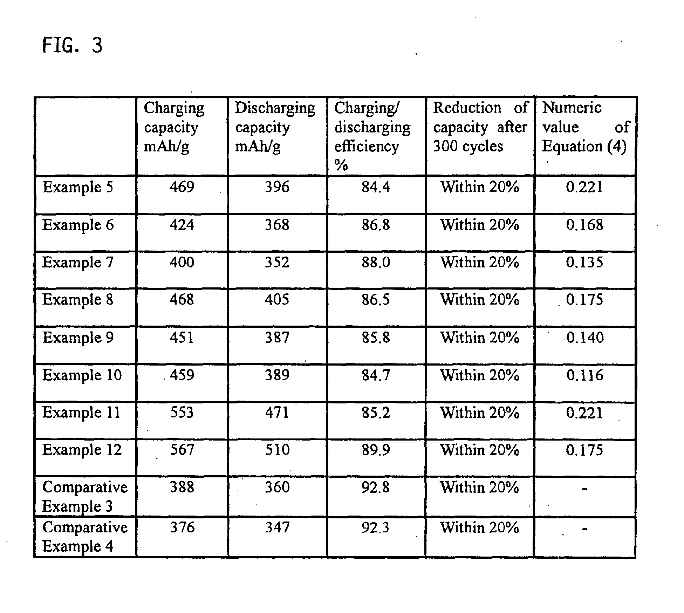

FIG. 1 shows the contact angles of binders to water ($\theta$w) and methylene iodide ($\theta_{MI}$) used when surface energies $\gamma_S$ of the binders used in Examples and Comparative Examples were measured. FIG. 2 shows charging curves of the secondary cells of Examples and Comparative Examples. FIG. 3 shows the relation among kinds of binders, capacities thereof and charging/discharging efficiencies thereof.

**Best Mode for Carrying out the Invention**

Preferably used as carbon material used as a part of anode active material used for a lithium ion secondary cell anode of the present invention is any one of natural graphite, artificial graphite, resin carbon, carbide of natural product, petroleum coke, coal coke, pitch coke, and meso-carbon microbead, which is 0.3370nm or less in $d_{002}$ of X-ray parameters that can be obtained from the Gakushin-method for X-ray diffraction of carbon, or combination of two or more of them. Particularly preferable is the carbon material comprising either natural graphite or artificial graphite. This can produce the lithium ion secondary cell anode of high safety and high capacity. It is to be noted here that the carbon material of 0.3370nm or less in the $d_{002}$ of the X-ray parameters obtainable from the Gakushin-method for X-ray diffraction of carbon has the degree of graphitization of not less than 0.4, which provides a region dominantly affected by the intercalation process of lithium.

Preferably used as the binder to bind those carbon materials is macromolecular material having the surface energy $\gamma_S$ of not less than 30mJm$^{-2}$ as calculated from measurement of contact angles under room temperature using water and methylene iodide as test liquids by using the following equations (1), (2) and (3).

$$1 + \cos\theta = 2\left[(\gamma_S^d \cdot \gamma_L^d)/\gamma_L\right]^{1/2} + 2\left[(\gamma_S^p \cdot \gamma_L^p)/\gamma_L\right]^{1/2} \tag{1}$$

$$\gamma_S = \gamma_S^d + \gamma_S^p \tag{2}$$

$$\gamma_L = \gamma_L^d + \gamma_L^p \tag{3}$$

where $\theta$ represents a contact angle in each test liquid, $\gamma_S^d$ and $\gamma_L^d$ represent a dispersion component of the surface energy of the macromolecular material and that of the test liquid, respectively, and $\gamma_S^p$ and $\gamma_L^p$ represent a polar component of the surface energy of the macromolecular material and that of the test liquid, respectively. Also, the following values are given to the values of the surface energies of water and methylene iodide:

Water: $\gamma_L^d = 21.8 mJm^{-2}$, and $\gamma_L^p = 51.0\ mJm^{-2}$

Methylene iodide: $\gamma_L^d = 48.5 mJm^{-2}$, and $\gamma_L^p = 2.3 mJm^{-2}$.

When the surface energy $\gamma_S$ of the binder is not less than 30 $mJm^{-2}$, the difference of the surface energy $\gamma_S$ of the binder from the surface energy $\gamma_S$ of the carbon material (e.g. the order of 120 $mJm^{-2}$ in the case of natural graphite) can be reduced, and as such can allow the interfacial surface energy to be reduced and stabilized, so as to provide increased contact action.

In the lithium ion secondary cell anode of the present invention, the macromolecular material used preferably has an electrochemically active carbonyl group in the main chain or the side chain and also has a carbonyl group content of not less than 0.05 in the macromolecular material expressed by the following equation (4):

$$\text{(Number of oxygen of carbonyl group} \times 16)/\text{(Molecular weight per unit of polymer)} \tag{4}$$

.

When the macromolecular material having a carbonyl group content of not less than 0.05, or preferably not less than 0.10, in the macromolecular material expressed by the following equation (4) is used, increased capacity can be provided.

The macromolecular material available in the present invention can be synthesized in a known method, such as a cold polymerization/condensation method, depending on the compound, without limited to any particular method. Among the macromolecular materials, polyimide, polyamide imide, and polyamide are preferably used. Further, polyimide and polyamide imide are further preferably used.

Among these macromolecular materials, aromatic polyimide, aromatic polyamide imide or aromatic polyamide, or combination selected from their combinations are preferable. Aromatic polyimide is particularly preferable. The content of the aromatic group can make electron transfer relatively easy.

These aromatic polyimide, aromatic polyamide imide and aromatic polyamide can also be synthesized in the known method, such as the cold polymerization/condensation method.

In the cold polymerization/condensation method, polyimide, polyamide imide and polyamide can be synthesized by reaction of tetracarboxylic dianhydride, acid chloride and diamine. The tetracarboxylic dianhydrides that may be used include, for example, pyromelletic dianhydride, 3,3',4,4'-diphenyltetracarboxylic dianhydride, 2,2',3,3'-diphenyltetracarboxylic dianhydride, 3,4,9,10-perylene-tetracarboxylic dianhydride, bis(3,4-dicarboxyphenyl)-ether dianhydride, benzene-1,2,3,4-tetracarboxylic dianhydride, 3,4,3',4'-benzophenone- tetracarboxylic dianhydride, 2,3,2',3-benzophenone-tetracarboxylic dianhydride, 2,3,3',4'-benzophenone-tetracarboxylic dianhydride, 1,2,5,6-naphthalene-tetracarboxylic dianhydride, 2,3,6,7-naphthalene-tetracarboxylic dianhydride, 1,2,4,5-naphthalene-tetracarboxylic dianhydride, 1,4,5,8-naphthalene-tetracarboxylic dianhydride, phenanthrene-1,8,9,10-tetracarboxylic dianhydride, pyrazine-2,3,5,6- tetracarboxylic dianhydride, thiophene-2,3,4,5-tetracarboxylic dianhydride, 2,3,3',4'-biphenyltetracarboxylic dianhydride, 3,4,3',4'-biphenyl- tetracarboxylic dianhydride, and 2,3,2',3'-biphenyl-tetracarboxylic dianhydride. These may be used in combination of two or more.

Acid chlorides that may be used include, for example, terephthalic acid chloride, isophthalic acid chloride, and trimellitic anhydride monochloride.

Diamine compounds that may be used include, for example, 3,3'-diaminodiphenylmethane, 3,3'-diaminodiphenylether, 3,3'-diamino diphenylsulfone, 3,3'-diaminodiphenylsulfide, p-phenylenediamine, m-phenylenediamine, 4,4'-diaminodiphenylpropane, 4,4'-diamino diphenylmethane, 3,3'-diaminobenzophenone, 4,4'-diaminodiphenylsulfide, 4,4'-diaminodiphenylsulfone, 4,4'-diaminodiphenylether, 3,4'-diamino diphenylether, and 1,5-diaminonaphthalene. These may be used in combination of two or more.

The solvents used to synthesize the macromolecular materials are not limited to any particular solvent, as long as it can allow these raw resins and polymers produced to be dissolved therein. Preferably, N,N-dimethylformamide, N,N-dimethylacetamide and N-methyl-2-pyrrolidone are used, in terms of reactivity and dispersing medium in the manufacture of the anode.

In addition to the carbon material, metals, such as boron and silicon, may be added in the anode active material and heat-treated, if desired. These metals are then subjected to the prescribed pulverization and classification, so as to be regulated to a required particle size to thereby produce the active material of the secondary cell anode material.

In addition to the carbon material, a metal or a metal compound may be used as the active material other than the organic polymer. The metals that may be used include, for example, tin and silicon. The metal compounds that may be used include, for example, oxides, chlorides, nitrides, borides and phosphides of various kinds of metals.

When the aromatic polyimide, the aromatic polyamide imide or the aromatic polyamide, the aromatic polyimide in particular, having the surface energy $\gamma$s of not less than 30mJm$^{-2}$ calculated by the equations (1), (2) and (3) mentioned above is used as the binder, decomposition of PC in the electrolyte solution is avoided, as described above. This enables the lithium to be intercalated in the carbon material even when the cell is increased in temperature by the self-heating, thus producing the secondary cell anode that can be used under high temperature atmosphere. In addition, when the aromatic polyimide, the aromatic polyamide imide or the aromatic polyamide, the aromatic polyimide in particular, having high electric capacity and having a carbonyl group content of not less than 0.05, or preferably not less than 0.10, in the macromolecular material expressed by the above-noted equation (4) is used as the binder, good use of the electric capacity of the aromatic polyimide, the aromatic polyamide imide and the aromatic polyamide as the secondary cell can be made without any reduction of the amount of the active material acting as the anode. Also, the binders including the aromatic polyimide act not only as the binder for the active material of the secondary cell anode but also as a binder for improving contact of copper and the like to a current collector.

Additionally, when an amorphous compound comprising lithium is formed in the secondary cell anode according to the present invention, the surface reaction of the secondary cell anode can be suppressed and also the entire capacity can be enhanced. To be more specific, for example, a content of solution and lithium hydroxide and the like are added to a gelled metallic alkoxide and then that slurry is applied to the surface of the lithium ion secondary cell anode according to the present invention. Thereafter, the content of solution is dried. This can produce a further improved high capacity secondary cell anode. The use of this lithium ion secondary cell anode and the binder for the lithium ion secondary cell can produce an improved lithium ion secondary cell. It is to be noted that as long as the amorphous compound is formed, no limitation is imposed on the metallic alkoxide.

In the following, the present invention will be described concretely with reference to Examples. It is to be noted that the present invention is not limited to the illustrated examples. The manufacturing of the cells and the measurements of the same were all performed in an argon glove box of dew point of -70°C or less, and the cathode and the anode having the size of 4×4cm were used.

(Example 1)

Fluorinated polyimide (hereinafter it is referred to as "6FDA-PDA") was used as the binder. This was added to the previously synthesized synthetic solvent of N,N-dimethylacetamide. The synthesized solution of 6FDA-PDA and N,N-dimethylacetamide was applied to a glass plate. After drying, the surface of the glass plate was washed with n-hexane and then dried at 80°C for ten minutes. Then, water and methylene iodide were used as the test liquids to measure the contact angles between the glass plate and the test liquids at room temperature. After the measurement of the contact angles, the surface energy $\gamma_S$ of the binder of 6-FDA-PDA was calculated by using the following equations (1), (2) and (3). The surface energy $\gamma$s calculated was 35.1 mJm$^{-2}$.

$$1 + \cos\theta = 2\left[(\gamma_S^{\,d} \cdot \gamma_L^{\,d})/\gamma_L\right]^{1/2} + 2\left[(\gamma_S^{\,p} \cdot \gamma_L^{\,p})/\gamma_L\right]^{1/2} \tag{1}$$

$$\gamma_S = \gamma_S^{\,d} + \gamma_S^{\,p} \tag{2}$$

$$\gamma_L = \gamma_L^{\,d} + \gamma_L^{\,p} \tag{3}$$

By adding powder of flake natural graphite having a mean particle diameter of 20μm and a $d_{002}$ of 0.3354nm of the X-ray parameters that can be obtained from the Gakushin-method for X-ray diffraction of carbon, the slurry was regulated to have a 10 mass% of binder content. Then, the slurry was applied to the surface of the current collector comprising the copper foil having thickness of 20μm. This was dried at 1.3kPa and 135°C for 17 hours to remove the synthetic solvent of N, N-dimethylacetamide therefrom. Sequentially, it further underwent the inversion treatment from polyamide acid to polyimide at 300°C for 1 hour under inert gas atmosphere. After flat-rolling, it was worked into a predetermined form to obtain an intended secondary cell anode. The secondary cell anode thus obtained was used to fabricate a three-pole cell. Lithium metal was used for a counter electrode and a reference electrode. Mixed solution of ethylene carbonate/PC containing 1 mol/liter of $LiClO_4$ (1/1vol%) was used for the electrolyte solution.

(Example 2)

Polyamide (hereinafter it is referred to as "PA") was used as the binder. This was added to the synthetic solvent of N, N-dimethylacetamide to synthesize the synthetic solution. The surface energy γs calculated was 42.8 $mJm^{-2}$. The remaining was processed in the same manner as that in Example 1 to produce the secondary cell anode.

(Example 3)

Polyimide (hereinafter it is referred to as "BPDA-PDA") was used as the binder. This was added to the synthetic solvent of N, N-dimethylacetamide to synthesize the synthetic solution. The surface energy γs calculated was 41.4 $mJm^{-2}$. The remaining was processed in the same manner as that in Example 1 to produce the secondary cell anode.

(Example 4)

A commercially available powder of polyvinylchloride (hereinafter it is referred to as "PVC") was used as the binder. This was added to the synthetic solvent of N, N-dimethylacetamide to synthesize the synthetic solution. The surface energy $\gamma_S$ calculated was 40.8 $mJm^{-2}$. The remaining was processed in the same manner as that in Example 1 to produce the secondary cell anode.

(Comparative Example 1)

Polyvinylidenefloride (hereinafter it is referred to as "PVdF") was used as the binder. This was added to the synthetic solvent of N,N-dimethylacetamide to synthesize the synthetic solution. The surface energy $\gamma_S$ calculated was 28.4 $mJm^{-2}$. The remaining was processed in the same manner as that in Example 1 to produce the secondary cell anode.

(Comparative Example 2)

Ethylenepropylene-diene gum (hereinafter it is referred to as "EPDM") was used as the binder. This was dissolved in cyclohexane to adjust the synthetic solution. The surface energy γs calculated was 23.6 $mJm^{-2}$. The remaining was processed in the same manner as that in Example 1 to produce the secondary cell anode.

The contact angles between the water and the methylene iodide used for the surface energies $\gamma_S$ of the binders used in Examples 1-4 and Comparative Examples 1 and 2 were measured are all shown in FIG. 1. In the Table, θw represents the contact angle of water, and $\theta_{MI}$ represents the contact angle of methylene iodide.

The secondary cells of Examples 1-4 and Comparative Examples 1 and 2 were charged to 4mV in a current density of 1.56 $mAcm^{-2}$, first; then charged to 0mA in constant potential; and then discharged to 1.5V in the current density of 1.56 $mAcm^{-2}$. The charging curves are shown in FIG. 2.

As shown in FIG. 2, the plateau stemming from the decomposition of PC is not found around 0.8V in Examples 1 to 4. On the other hand, the plateau is found therearound in Comparative Examples, from which it can be seen that the decomposition of PC was caused.

It can be understood from the fact mentioned above that when the interfacial surface energy between the binder and the carbon material is controlled by regulating the surface energy of the binder to 30 $mJm^{-2}$ or more, PC contained in the electrolyte solution is prevented from contacting directly with the carbon material and thereby the decomposition of PC is suppressed.

In Examples 5 to 12 and Comparative Examples 3 and 4, the binders having the surface energy of not less than 30mJm$^{-2}$ were used (except Comparative Example 3). The relation among content, capacity and charging/discharging efficiency of the carbonyl group in the macromolecular material expressed by the following equation (4) is shown.

$$\text{(Number of oxygen of carbonyl group} \times 16)/\text{(Molecular weight per unit of polymer)} \qquad (4)$$

(Example 5)

Polyamide acid comprising pyromelletic dianhydride (hereinafter it is referred to as "PMDA") and p-phenylenediamine (hereinafter it is referred to as "PDA") was used as the binder. This was added to the synthetic solvent of N-methyl-2-pyrrolidone (hereinafter it is referred to as "NMP"), to synthesize the synthetic solution so as to obtain a 10 weight% solution.

Then, by adding powder of flake natural graphite having a mean particle diameter of 20μm to that solution, the slurry was regulated to contain 5g of binder in 95g of flake natural graphite, in other words, have a binder content of 5 mass%. Then, the slurry was applied to the surface of the current collector comprising the copper foil having thickness of 20μm and then dried to remove NMP therefrom. Sequentially, it underwent the inversion treatment from polyamide acid to polyimide at 300°C for 1 hour under inert gas atmosphere. After flat-rolling, it was worked into a predetermined form to obtain an intended secondary cell anode. The secondary cell anode thus obtained was used to fabricate a three-pole cell. Lithium metal was used for the counter electrode and the reference electrode. The cell was charged to 0V in the current density of 25mA in order to intercalate the lithium in the graphite. Thereafter, the cell was discharged to 3 V for de-intercalation of the lithium. Mixed solution of ethylene carbonate containing 1 mol/L of $LiClO_4$ : dimethylcarbonate = 1:1 (volume ratio) was used for the electrolyte solution. The charging capacity in the first cycle was 469mAh/g and the discharging capacity in the first cycle was 396mAh/g, so that the discharging efficiency defined by these ratios was 84.4%. It should be noted that in order to clarify the correspondence to the comparative examples given below, these values were calculated by adding the capacity of polyimide to the capacity of the powder of graphite, assuming that polyimide itself merely functions as the binder. It was found that the reduction of the discharging capacity after 300 cycles was within 20%.

(Example 6)

Except that diaminodiphenylether (hereinafter it is referred to as "DDE") was used as a substitute for PDA in Example 5, the fabrication of the cell and the charging/discharging tests were performed in the same procedures as in Example 5. The charging capacity in the first cycle was 424mAh/g and the discharging capacity in the first cycle was 368mAh/g, so that the discharging efficiency was 86.8%. The reduction of the discharging capacity after 300 cycles was within 20%.

(Example 7)

Except that 1,4-bis (4-aminophenoxy) benzene (hereinafter it is referred to as "BAPB") was used as a substitute for PDA in Example 5, the fabrication of the cell and the charging/discharging tests were performed in the same procedures as in Example 5. The charging capacity in the first cycle was 400mAh/g and the discharging capacity in the first cycle was 352mAh/g, so that the discharging efficiency was 88.0%. The reduction of the discharging capacity after 300 cycles was within 20%.

(Example 8)

Except that 3,4,3',4,4'-biphenyltetracarboxylic dianhydride (hereinafter it is referred to as "BPDA") was used as a substitute for PMDA in Example 5, the fabrication of the cell and the charging/discharging tests were performed in the same procedures as in Example 5. The charging capacity in the first cycle was 468mAh/g and the discharging capacity in the first cycle was 405mAh/g, so that the discharging efficiency was 86.5%. The reduction of the discharging capacity after 300 cycles was within 20%.

(Example 9)

Except that DDE was used as a substitute for PDA in Example 8, the fabrication of the cell and the charging/ discharging tests were performed in the same procedures as in Example 8. The charging capacity in the first cycle was 451mAh/g and the discharging capacity in the first cycle was 387mAh/g, so that the discharging efficiency was 85.8%. The reduction of the discharging capacity after 300 cycles was within 20%.

(Example 10)

Except that BAPB was used as a substitute for PDA in Example 8, the fabrication of the cell and the charging/discharging tests were performed in the same procedures as in Example 8. The charging capacity in the first cycle was 459mAh/g and the discharging capacity in the first cycle was 389mAh/g, so that the discharging efficiency was 84.7%. The reduction of the discharging capacity after 300 cycles was within 20%.

(Example 11)

Except that a 10 mass% of the binder was contained in Example 5, the fabrication of the cell and the charging/discharging tests were performed in the same procedures as in Example 5. The charging capacity in the first cycle was 553mAh/g and the discharging capacity in the first cycle was 471mAh/g, so that the discharging efficiency was 85.2%. The reduction of the discharging capacity after 300 cycles was within 20%.

(Example 12)

Except that a 10 mass% of the binder was contained in Example 8, the fabrication of the cell and the charging/discharging tests were performed in the same procedures as in Example 8. The charging capacity in the first cycle was 567mAh/g and the discharging capacity in the first cycle was 510mAh/g, so that the discharging efficiency was 89.9%. The reduction of the discharging capacity after 300 cycles was within 20%.

(Comparative Example 3)

Except that the same PVdF as that of Comparative Example 1 was used in Example 5, the fabrication of the cell and the charging/discharging tests were performed in the same procedures as in Example 5. The charging capacity in the first cycle was 388mAh/g and the discharging capacity in the first cycle was 360mAh/g, so that the discharging efficiency was 92.8%. The reduction of the discharging capacity after 300 cycles was within 20%.

(Comparative Example 4)

Except that polystyrene was used for the binder in Example 5, the fabrication of the cell and the charging/discharging tests were performed in the same procedures as in Example 5. The charging capacity in the first cycle was 376mAh/g and the discharging capacity in the first cycle was 347mAh/g, so that the discharging efficiency was 92.3%. The reduction of the discharging capacity after 300 cycles was within 20%.

The results mentioned above are summarized in FIG. 3.

It can be seen from FIG. 3 that Examples 5 to 12 in which polyimide, polyamide imide and polyamides were used for a part of the anode active material according to the present invention are high in capacity, as compared with Comparative Examples 3 and 4 in which the conventional anode active materials were used. It can also be seen therefrom that the examples are equal to or higher than the comparative examples in the charging/discharging efficiency after 300 cycles.

**Capability of Exploitation in Industry**

The present invention thus constructed can produce the lithium ion secondary cell anode having high charging/discharging efficiency that can suppress the decomposition reaction of PC even when PC is used as the electrolyte solution and also can be used even under increased temperature by the self-heating originating from the long-hours use of the cell or even under a high temperature atmosphere; the binder for the lithium ion secondary cell anode; and the lithium ion secondary cell using them.

According to the present invention, there is no need to add any other binders. As a result of this, there is no need to reduce an amount of the anode active material of the entire secondary cell anode. This can provide the lithium ion secondary cell anode having increased capacity of the cell and improved charging/discharging efficiency; the binder for the lithium ion secondary cell anode; and the lithium ion secondary cell using them.

**Claims**

1. A lithium ion secondary cell anode, wherein carbon material having a $d_{002}$ of not more than 0.3370nm of X-ray parameters that can be obtained from the Gakushin-method for X-ray diffraction of carbon is used as a part of an active material, and a macromolecular material having a surface energy $\gamma_S$ of not less than 30mJm$^{-2}$ is used as a binder.

2. The lithium ion secondary cell anode according to Claim 1, wherein the surface energy $\gamma_S$ is a value calculated from measurement of contact angles under room temperature using water and methylene iodide as test liquids by using the following equations (1), (2) and (3):

$$1 + \cos\theta = 2\ [(\gamma_S^{\ d} \cdot \gamma_L^{\ d})/\gamma_L]^{\ 1/2} + 2\ [(\gamma_S^{\ p} \cdot \gamma_L^{\ p})/\gamma_L]^{\ 1/2} \tag{1}$$

$$\gamma_S = \gamma_S^{\ d} + \gamma_S^{\ p} \tag{2}$$

$$\gamma_L = \gamma_L^{\ d} + \gamma_L^{\ p} \tag{3}$$

where $\theta$ represents a contact angle in each test liquid, $\gamma_S^{\ d}$ and $\gamma_L^{\ d}$ represent a dispersion component of the surface energy of the macromolecular material and that of the test liquid, respectively, and $\gamma_S^{\ p}$ and $\gamma_L^{\ p}$ represent a polar component of the surface energy of the macromolecular material and that of the test liquid, respectively, and following values are given to the values of the surface energies of water and methylene iodide:
Water: $\gamma_L^{\ d}=21.8$mJm$^{-2}$, and $\gamma_L^{\ p}=51.0$ mJm$^{-2}$
Methylene iodide: $\gamma_L^{\ d}=48.5$mJm$^{-2}$, and $\gamma_L^{\ p}=2.3$mJm$^{-2}$.

3. The lithium ion secondary cell anode according to Claim 1 or 2, wherein the macromolecular material is a macromolecular material which has an electrochemically active carbonyl group in its main chain or its side chain and also has a carbonyl group content of not less than 0.05 in the macromolecular material expressed by the following equation (4):

$$\text{(Number of oxygen of carbonyl group} \times 16)/\text{(Molecular weight per unit of polymer)} \tag{4}$$

.

4. The lithium ion secondary cell anode according to Claim 1 or 2, wherein the macromolecular material is any one of polyimide, polyamide imide and polyamide, or combination of two or more of them.

5. The lithium ion secondary cell anode according to Claim 1 or 2, wherein the macromolecular material is any one of aromatic polyimide, aromatic polyamide and aromatic polyamide imide, or combination of two or more of them.

6. The lithium ion secondary cell anode according to Claim 1, wherein the carbon material is any one of natural graphite, artificial graphite, resin carbon, carbide of natural product, petroleum coke, coal coke, pitch coke, and meso-carbon microbead, or combination of two or more of them.

7. The lithium ion secondary cell anode according to Claim 1, wherein the carbon material includes natural graphite or artificial graphite.

8. The lithium ion secondary cell anode according to Claim 1, wherein the active material includes a metal or a metallic compound.

9. A binder for a lithium ion secondary cell anode, which is a macromolecular material having a surface energy $\gamma_S$ of not less than 30mJm$^{-2}$ calculated from measurement of contact angles under room temperature using water and methylene iodide as test liquids by using the following equations (1), (2) and (3):

$$1 + \cos\theta = 2\ [(\gamma_S^{\ d} \cdot \gamma_L^{\ d})/\gamma_L]^{\ 1/2} + 2\ [(\gamma_S^{\ p} \cdot \gamma_L^{\ p})/\gamma_L]^{\ 1/2} \tag{1}$$

$$\gamma_S = \gamma_S^{\,d} + \gamma_S^{\,p} \tag{2}$$

$$\gamma_L = \gamma_L^{\,d} + \gamma_L^{\,p} \tag{3}$$

where $\theta$ represents a contact angle in each test liquid, $\gamma_S^{\,d}$ and $\gamma_L^{\,d}$ represent a dispersion component of the surface energy of the macromolecular material and that of the test liquid, respectively, and $\gamma_S^{\,p}$ and $\gamma_L^{\,p}$ represent a polar component of the surface energy of the macromolecular material and that of the test liquid, respectively, and following values are given to the values of the surface energies of water and methylene iodide:

Water: $\gamma_L^{\,d}=21.8 mJm^{-2}$, and $\gamma_L^{\,p}=51.0\ mJm^{-2}$
Methylene iodide: $\gamma_L^{\,d}=48.5 mJm^{-2}$, and $\gamma_L^{\,p}=2.3 mJm^{-2}$.

**10.** The binder for lithium ion secondary cell anode according to Claim 9, wherein the macromolecular material is a macromolecular material which has an electrochemically active carbonyl group in its main chain or its side chain and also has a carbonyl group content of not less than 0.05 in the macromolecular material expressed by the following equation (4):

$$\text{(Number of oxygen of carbonyl group} \times 16)/\text{(Molecular weight per unit of polymer)} \tag{4}$$

**11.** The binder for lithium ion secondary cell anode according to Claim 9, wherein the macromolecular material is any one of polyimide, polyamide imide and polyamide, or combination of two or more of them.

**12.** The binder for lithium ion secondary cell anode according to Claim 9, wherein the macromolecular material is any one of aromatic polyimide, aromatic polyamide and aromatic polyamide imide, or combination of two or more of them.

**13.** A lithium ion secondary cell using the lithium ion secondary cell anode according to Claim 1.

**14.** A lithium ion secondary cell using the binder for the lithium ion secondary cell anode according to Claim 9.

FIG. 1

| | $\theta_w$ | $\theta_{MI}$ | $\gamma_s{}^d$ | $\gamma_s{}^p$ | $\gamma_s$ |
|---|---|---|---|---|---|
| Example 1 | 77.5 | 45.1 | 28.3 | 6.8 | 35.1 |
| Example 2 | 64.4 | 35.5 | 30.1 | 12.7 | 42.8 |
| Example 3 | 69.3 | 32.3 | 31.9 | 9.4 | 41.4 |
| Example 4 | 88.1 | 30.6 | 39.5 | 1.3 | 40.8 |
| Comparative Example 1 | 82.8 | 61.1 | 21.7 | 6.7 | 28.4 |
| Comparative Example 2 | 99.0 | 61.4 | 22.1 | 1.5 | 23.6 |

FIG. 2

EP 1 274 141 A1

FIG. 3

| | Charging capacity mAh/g | Discharging capacity mAh/g | Charging/ discharging efficiency % | Reduction of capacity after 300 cycles | Numeric value of Equation (4) |
|---|---|---|---|---|---|
| Example 5 | 469 | 396 | 84.4 | Within 20% | 0.221 |
| Example 6 | 424 | 368 | 86.8 | Within 20% | 0.168 |
| Example 7 | 400 | 352 | 88.0 | Within 20% | 0.135 |
| Example 8 | 468 | 405 | 86.5 | Within 20% | 0.175 |
| Example 9 | 451 | 387 | 85.8 | Within 20% | 0.140 |
| Example 10 | 459 | 389 | 84.7 | Within 20% | 0.116 |
| Example 11 | 553 | 471 | 85.2 | Within 20% | 0.221 |
| Example 12 | 567 | 510 | 89.9 | Within 20% | 0.175 |
| Comparative Example 3 | 388 | 360 | 92.8 | Within 20% | - |
| Comparative Example 4 | 376 | 347 | 92.3 | Within 20% | - |

## INTERNATIONAL SEARCH REPORT

International application No.

PCT/JP01/02610

**A. CLASSIFICATION OF SUBJECT MATTER**
Int.Cl⁷ H01M4/62, H01M4/02, H01M4/58, H01M10/40

According to International Patent Classification (IPC) or to both national classification and IPC

**B. FIELDS SEARCHED**

Minimum documentation searched (classification system followed by classification symbols)
Int.Cl⁷ H01M4/62, H01M4/02, H01M4/58, H01M10/40

Documentation searched other than minimum documentation to the extent that such documents are included in the fields searched
Jitsuyo Shinan Koho          1922-1996    Toroku Jitsuyo Shinan Koho  1994-2001
Kokai Jitsuyo Shinan Koho    1971-2001    Jitsuyo Shinan Toroku Koho  1996-2001

Electronic data base consulted during the international search (name of data base and, where practicable, search terms used)
JOIS (binder&+binding agent)*surface energy&*lithium battery
                                                      (in Japanese)

**C. DOCUMENTS CONSIDERED TO BE RELEVANT**

| Category* | Citation of document, with indication, where appropriate, of the relevant passages | Relevant to claim No. |
|---|---|---|
| X | JP, 11-158277, A (Kanegafuchi Chem. Ind. Co., Ltd.), 15 June, 1999 (15.06.99), page 2, column 2, line 47 to page 3, column 4, line 6; | 1-2,4-7,9, 11-14 |
| Y | page 4, column 5, lines 1 to 4; table 1   (Family: none) | 8 |
| A | | 3,10 |
| Y | JP, 5-266880, A (Matsushita Electric Ind. Co., Ltd.), 15 October, 1993 (15.10.93), page 2, column 1, lines 1 to 13   (Family: none) | 8 |

☐ Further documents are listed in the continuation of Box C.          ☐ See patent family annex.

| | |
|---|---|
| *    Special categories of cited documents:<br>"A"  document defining the general state of the art which is not considered to be of particular relevance<br>"E"  earlier document but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |
| Date of the actual completion of the international search<br>    21 June, 2001 (21.06.01) | Date of mailing of the international search report<br>    10 July, 2001 (10.07.01) |
| Name and mailing address of the ISA/<br>    Japanese Patent Office | Authorized officer |
| Facsimile No. | Telephone No. |

Form PCT/ISA/210 (second sheet) (July 1992)